# EUROPEAN PATENT SPECIFICATION

(11) **EP 3 444 042 B1**
(45) Date of publication and mention of the grant of the patent: **01.01.2020**
(21) Application number: 18460049.2
(22) Date of filing: 17.08.2018
(51) Int. Cl.: B09B 3/00, B02C 18/14, B02C 19/00, B02C 23/36

(54) **DEVICE FOR UNSEALING AND EMPTYING PRESSURE CONTAINERS**
ENTSIEGELUNGS- UND ENTLEERUNGSVORRICHTUNG FÜR DRUCKBEHÄLTER
DISPOSITIF POUR OUVRIR ET VIDER DES CONTENANTS SOUS PRESSION

(30) Priority: 18.08.2017 PL 42258217
(43) Date of publication of application: 20.02.2019
(73) Proprietor: CSD-ECO sp. z o. o., 93-129 Lódz (PL)
(72) Inventor: Jozwik, Krzysztof, 94-234 Lodz (PL); Obidowski, Damian, 95-020 Stroza (PL); Palczynski, Tomasz, 95-100 Zgierz (PL); Kantyka, Krzysztof, 91-059 Lodz (PL); Sobczak, Krzysztof, 90-348 Lodz (PL); Reorowicz, Piotr, 91-465 Lodz (PL); Fligel, Anna, 93-129 Lodz (PL); Dembinski, Jaroslaw, 93-129 Lodz (PL)
(74) Representative: Dziubinska, Joanna

(56) References cited:
- DE-A1- 4 338 561
- JP-A- H07 144 146
- US-A- 4 356 981

## Description

The subject of the invention is a device for unsealing and emptying pressure containers. Pressure containers used for dispensing or applying various substances (solid, liquid and gas) in the form of spray or foamed stream, commonly called aerosol containers, make a significant volume in the total container waste stream.

Currently, a very small percentage of containers is subject to the recovery of materials which were used at the stage of container production. An extremely important issue in the recovery process is the unsealing of a pressure container and its emptying in conditions that will not cause hazard to people and the natural environment. This hazard comes from substances in containers that are residual after using the product or fill a significant part of the container in the case of defective containers that are not emptied in the manner prescribed for them. These substances are both atomized materials and filling gases, mainly propane and butane, and therefore the substances that can be explosive under certain conditions.

Therefore, in order to prevent possible explosions and for safe destruction, these containers are usually thrown into devices equipped with shredding units by means of which they are destroyed and emptied of the remaining content.

The device in which aerosol containers are mechanically crushed is described in the patent application DE10535554. The process takes place in a space filled with water and inert gas. The device is equipped with a chimney for discharging released gases and a container for receiving shredded containers.

Patent US6360678 describes the method and the device in which aerosol containers are crushed by gears mounted on rotating rolls. The rolls are placed in such a way that each gear of one roll enters the area between a pair of adjacent gears of the second roll. Crushing takes place in an inert gas atmosphere.

Patent application WO2016005699 describes a device in which aerosol containers are destroyed by means of two counter-rotating rolls with gears which are not in direct contact with each other. Aerosol containers fall into the space between the rolls where they are crushed and punctured. At least one of the rolls is movable, which makes it possible to change their mutual distance and thus facilitates the destruction of containers of various sizes.
American patent no US4356981 discloses an apparatus for disposing aerosol or pressurized containers containing gaseous, liquid, inflammable or toxic residues. The apparatus includes a hopper, a shredder which has intermeshing rollers or claws for treating and compacting the metal walls of the container. Beneath the shredder is a conveyor with a moving belt perforated or permeable to liquid. The liquid is pumped along a pipe to a waste storage tank.

The aim of this invention is to provide a device which allows safe unsealing and emptying of pressure containers. This process can take place continuously in a large stream of containers. This device includes a hopper, unsealing chamber, waste gas suction system, chamber receiving shredded containers, shredding unit with an unsealing chamber filled with non-flammable liquid. The shredding unit consists of drive and tension shafts with puncturing caterpillars supported by pressure rollers, scraper with a guard, knife roller and counter-plate.

Caterpillars are equipped with puncturing elements, which enable unsealing of aerosol containers, preferably in the form of bolts, pins and saw-tooth blade elements.

Teeth installed on the knife roll are of constant thickness or have a radius undercut and the angle between the tangent to the cylindrical surface formed by the radius-cut teeth of the knife roll and the perpendicular to the radius of the knife roll at the point of the tooth tip is at least 90 degrees, and the angle between the tangent to this tooth surface and the perpendicular to the radius of the cylinder at the point of the tooth tip is sharp.

The knife roll in the device according to the invention can be made in a symmetrical or asymmetrical version.

Recovered heavy liquids collected in the unsealing chamber are sucked into an external tank through the suction channel at the bottom of the unsealing chamber, whereas light liquids through the second suction channel just below the surface of the liquid filling the unsealing chamber.

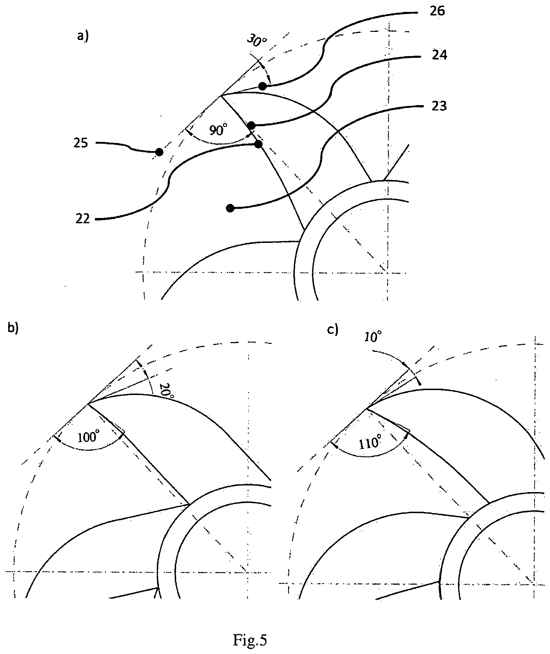

The design and functional features of the device according to the invention are illustrated in drawings showing the preferred embodiment in which Fig. 1 shows a cross-sectional view of the device according to the invention, Fig. 2 - knife roll assembly with constant thickness teeth and a counter plate, Fig. 3 - knife roll assembly with radius-cut teeth and counter-plate in a symmetrical version, Fig. 4 - knife roll assembly with radius-cut teeth and counter-plate in an unsymmetrical version, Fig. 5 (a, b, c) - variants of embodiments of knife roll teeth.

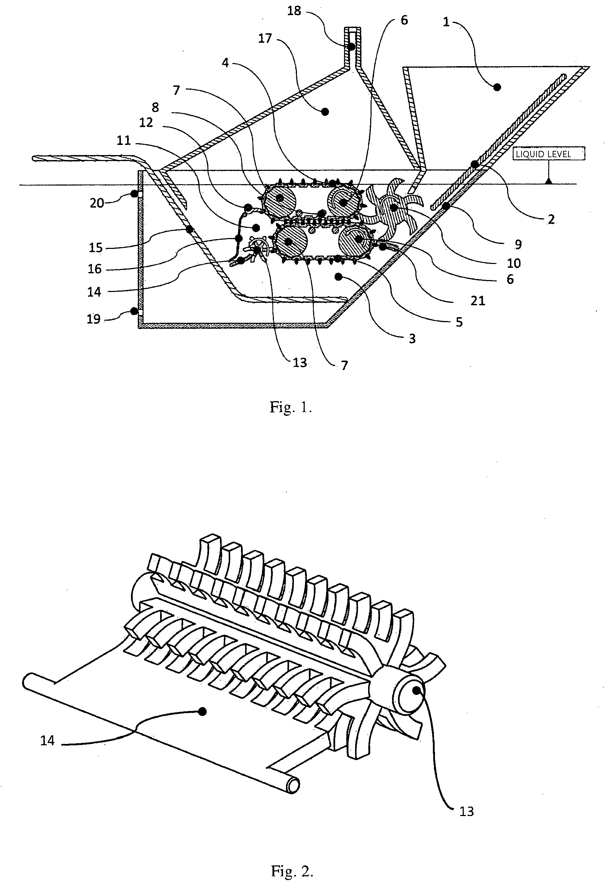

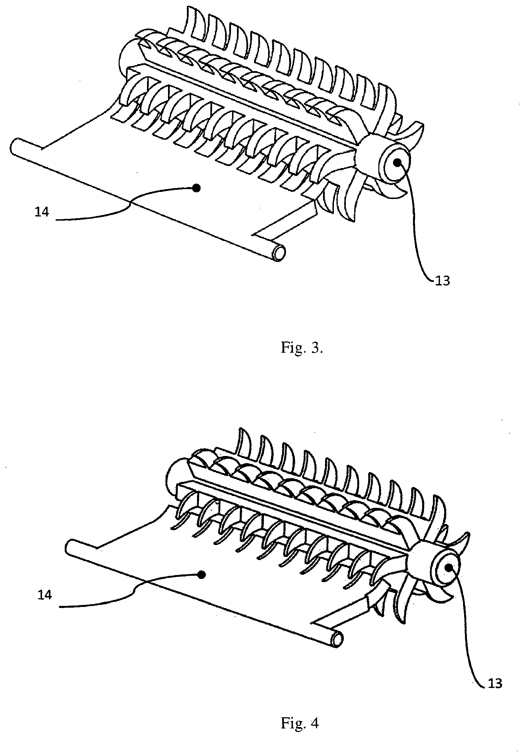

Pressure containers fed to the device according to the invention by a hopper (1) pressure containers are fed by means of a feeder (2), in particular in the form of a grooved shaft with transport spaces for containers, in the form of a belt or screw conveyor, through a toothed carrier (10) to the unsealing chamber (3). The unsealing chamber (3) is filled to the level ensuring sealing of the unsealing chamber (3) and the pre-shredding space (11), in particular to the level above the upper line of the puncturing caterpillar (4) with non-flammable liquid, in particular water, deionized water, water with acidic or alkaline pH environmentally friendly. In the unsealing chamber there are upper (4) and bottom (5) puncturing caterpillars. The puncturing caterpillars supported on the driving (6) and tensioning shafts (7) are additionally supported by pressure rollers (8) whose task is to clamp the space in which pressure containers move. The puncturing caterpillars are equipped with elements enabling unsealing of pressure containers, in particular in the form of bolts, pins, saw tooth blade elements etc. Containers taken by the feeder (2) move in the space between the tank casing (9), feeder (2), toothed carrier (10) and support element (21), which ensures their transport to the space between the puncturing caterpillars. In this space pressure containers move according to the movement of the caterpillars and the puncturing elements of the caterpillars unseal the pressure containers, releasing gases and other substances contained therein. Drive shafts (6) of the puncturing caterpillars (4) and (5) move counter-wise with the same or different speed value. At different speed values, additional tearing or mechanical cutting of pressure containers is obtained in addition to puncturing. Pressure containers can be fed from the hopper (1) to the feeder (2) perpendicular to the axis of feeder rotation or at an angle different from the straight one, and in extreme cases it can be a parallel system to the axis of the feeder rotation. The width of the feeder (2) and the puncturing caterpillar system (4) and (5) determines the device capacity. The geometry of the puncturing caterpillars, their driving, supporting and tensioning wheels ensures the transport of unsealed pressure containers to the pre-shredding space (11). Pressure containers jammed on the puncturing elements of the upper caterpillar (4) are taken by the scraper (12) and fall along with the remaining unsealed pressure containers into the space of the knife roll (13). The design of the knife roll (13) makes it possible to take the container and force its movement towards the counter-plate (14) which, in cooperation with the knife roll, cuts the side surface of the container releasing any remaining gases and other substances. Spacing of knives and counter-knives enables preliminary fragmentation of pressure container material and further transport by conveyor belt (15) with an openwork structure for emptying the container from the substances originally stored in it. A suitable way of transporting pressure containers from the puncturing caterpillars is provided by the scraper (12), guard (16) as well as the knife roll (13) and the counter-plate (14). Cutting of pressure containers takes place in a bath of liquid which fills the working chamber, which eliminates the possibility of explosion hazard. The design of the conveyor belt (15), collecting the shredded material, and the unsealing chamber (3) and in particular the level of liquid filling this chamber, provide a seal against the entry of gases into the environment. The released gases are transported by a suction system (17), located above the surface of the liquid, into the exhaust gas channel (18) and in the catalytic after-burning system, they are subject to disposal. Liquids released from the unsealed containers are collected in the chamber (3) in two layers - heavy liquids at the bottom of the chamber, where they are sucked into an external tank through the heavy liquid suction channel (19) and undergo further processing, in particular as semi-finished products for the production of synthetic fuel and light liquids are sucked through the light liquid suction channel (20) just below the surface of the liquid which fills the working chamber and undergo the same process. The knife roll (13) has two types of shapes: the first in the shape of a gear, where cutting and trailing edges are made by radii attached in the same point, forming a tooth of constant thickness (Fig. 2). The second shape (Fig. 3) also forms a gear, wherein on the attacking (cutting) side the teeth have a radius undercut, and the resulting cylindrical surface (22) is a place (23) for the pressure container, allowing it to be taken in the direction of the counter-plate. (14). The angle between the tangent (24) to the cylindrical surface (22) and the perpendicular (25) to the radius of the cylinder (13) at the point of the tooth tip is at least 90 degrees. The part on the trailing side is also made with a radius, where the angle between the tangent (24) to the tooth surface and the perpendicular (25) to the radius of the roll (13) at the point of the tooth tip is sharp and is below 30 degrees. The counter plate (14) has notches enabling movement of knives of the knife roll and realization of the cutting operations of pressure containers.

Both versions of the knife roll (13) cooperating with the counter plate (14) can be made in a symmetrical version, i.e. knives of knife roll and knives of the counter plate are of the same width, and in an asymmetrical version, for which the knives of the knife roll are wider than the knives of the counter plate or vice versa. This allows obtaining fragments of pre-shredded pressure containers of similar or different dimensions.

## Claims

1. Unsealing and emptying device for pressure containers including a hopper, unsealing chamber filled with non-flammable liquid, waste gas suction system, chamber receiving shredded containers, shredding unit **characterized in that** the shredding unit comprises drive shafts (6) and tension shafts (7) with puncturing caterpillars (4 and 5) supported by pressure rollers (8), scraper (12) with guard (16), knife roll (13) and counter-plate (14).

2. Device according to claim 1, **characterized in that** the puncturing caterpillars (4 and 5) are equipped with elements enabling unsealing the pressure containers, preferably in the form of bolts, pins, or saw tooth blade elements.

3. Device according to claim 1, **characterized in that** the teeth installed on the knife roll (13) have constant thickness.

4. Device according to claim 1, **characterized in that** the teeth installed on the knife roll (13) have a radius undercut.

5. Device according to claim 1 or 4, **characterized in that** the angle between the tangent (24) to the cylindrical surface (22) and the perpendicular (25) to the radius of the cylinder (13) at the point of the tooth tip is at least 90 degrees.

6. Device according to claim 1 or 4, **characterized in that** the angle between the tangent (24) to the tooth surface and the perpendicular (25) to the radius of the roll (13) at the point of the tooth tip is sharp.

7. Device according to claim 1, **characterized in that** the widths of the knives of the knife roll (13) and of the counter-plates (14) are the same width.

8. Device according to claim 1, **characterized in that** the knives of the knife roll (13) are wider than the knives of the counter plate (14).

9. Device according to claim 1, **characterized in that** the knives of the knife roll (13) are narrower than the knives of the counter plate (14).

10. Device according to claim 1, **characterized in that** heavy liquids released from the unsealed containers collected in the chamber (3) are sucked into the external tank through the suction channel (19) at the bottom of the chamber (3).

11. Device according to claim 1, **characterized in that** light liquids released from the unsealed containers collected in the chamber (3) are sucked out through the suction channel (20), just below the surface of the liquid filling the chamber (3).

## Patentansprüche

1. Die Anlage für Entspannung und Entleerung der Druckbehälter, die eine Rutschkammer und eine mit unbrennbarer Flüssigkeit ausgefüllte Entspannungskammer, ein Absaugsystem für Abgase, eine zerkleinerte Behälter abnehmende Kammer, eine Zerkleinerungseinheit enthält, kennzeichnet sich dadurch, dass die Zerkleinerungseinheit durch Antriebswellen (6) und Anspannungswellen (7) mit durchstechenden Raupen (4 und 5) mit Andruckrollen (8) gestützt, den Abstreifer (12) mit Abdeckung (16), die Messerwalze (13) und die Gegendruckplatte (14) gebildet wird.

2. Die Anlage gemäß Anspruch 1 kennzeichnet sich dadurch, dass durchstechende Raupen (4 und 5) mit Elementen ausgestattet sind, welche die Entspannung der Druckbehälter günstig, in Form von Bolzen, Stiften, Elementen in Form von gezahnten Klingen ermöglichen.

3. Die Anlage gemäß Anspruch 1 kennzeichnet sich dadurch, dass die an der Messerwalze (13) installierten Zähne ein konstante Dicke haben.

4. Die Anlage gemäß Anspruch 1 kennzeichnet sich dadurch, dass die an der Messerwalze (13) installierten Zähne einen mit einem Strahl ausgeführten Unterschnitt haben.

5. Die Anlage gemäß Anspruch 1 kennzeichnet sich dadurch, dass der Winkel zwischen der Tangente (24) zur Walzoberfläche (22) und der Senkrechte (25) zum Walzradius (13) an der Zahnspitze mindestens 90 Grad beträgt.

6. Die Anlage gemäß Anspruch 1 kennzeichnet sich dadurch, dass der Winkel zwischen der Tangente (24) zur Zahnfläche und der Senkrechte (25) zum Walzradius (13) an der Zahnspitze ein spitzer Winkel ist.

7. Die Anlage gemäß Anspruch 1 kennzeichnet sich dadurch, dass die Messerbreiten der Messerwalze (13) und der Gegendruckplatte (14) dieselbe Breite besitzen.

8. Die Anlage gemäß Anspruch 1 kennzeichnet sich dadurch, dass die Messer der Messerwalze (13) breiter als die Messer der Gegendruckplatte (14) sind.

9. Die Anlage gemäß Anspruch 1 kennzeichnet sich dadurch, dass die Messer der Messerwalze (13) enger als die Messer der Gegendruckplatte (14) sind.

10. Die Anlage gemäß Anspruch 1 kennzeichnet sich dadurch, dass schwere in der Kammer (3) versammelte aus den entspannten Behältern entfernte Flüssigkeiten, in den externen Behälter durch einen Absaugkanal (19) am Kammerboden (3) abgesaugt werden.

11. Die Anlage gemäß Anspruch 1 kennzeichnet sich dadurch, dass leichte in der Kammer (3) versammelte aus den entspannten Behältern entfernte Flüssigkeiten durch einen Absaugkanal (20) ganz nahe unter der Fläche der Flüssigkeit, die die Kammer (3) ausfüllt, abgesaugt werden.

## Revendications

1. Equipement de descellement et de vidange pour conteneurs sous pression, comprenant une chambre de goulotte, une chambre de descellement remplie de liquide ininflammable, un système d'aspiration du gaz d'échappement, une chambre recevant des conteneurs déchiquetés, un ensemble de broyage, qui se caractérise de cela que l'ensemble de broyage est formé par des rouleaux d'entraînement (6) et rouleaux tendeurs (7) chenilles de perçage (4 et 5) supportés par des rouleaux presseurs (8), un racleur (12) avec couvercle (16), un cylindre de couteau (13) et une contre-plaque (14).

2. Le dispositif selon la revendication 1, qui se **caractérise par** cela que les chenilles de perçage (4 et 5) sont équipées des éléments permettant le descellement des conteneurs sous pression, favorablement dans la forme des goupilles, des chevilles, des éléments en forme de lames de scies dentées.

3. Le dispositif selon la revendication 1, qui se **caractérise par** cela que les dents installées sur le cylindre de couteau (13), les éléments en forme de lames ont une épaisseur constante.

4. Le dispositif selon la revendication 1, qui se **caractérise par** cela que les dents installées sur le cylindre de couteau (13) ont une dépouille réalisée par un rayon.

5. Le dispositif selon la revendication 1 ou 4, qui se **caractérise par** cela que l'angle entre la tangente (24) à la surface cylindrique (22) et la perpendiculaire (25) au rayon du cylindre (13) au niveau de la pointe de la dent est au moins 90 degrés.

6. Le dispositif selon la revendication 1 ou 4, qui se **caractérise par** cela que l'angle entre la tangente (24) à la surface de la dent et la perpendiculaire (25) au rayon du cylindre (13) au niveau de la pointe de la dent est pointu.

7. Le dispositif selon la revendication 1, qui se **caractérise par** cela que les largeurs des couteaux du cylindre de couteau (13) et des contre-plaques (14) ont la même largeur.

8. Le dispositif selon la revendication 1, qui se **caractérise par** cela que les couteaux du cylindre de couteau (13) sont plus larges que les couteaux de contre-plaque (14).

9. Le dispositif selon la revendication 1, qui se **caractérise par** cela que les couteaux du cylindre de couteau (13) sont plus étroits que les couteaux de contre-plaque (14).

10. Le dispositif selon la revendication 1, qui se **caractérise par** cela que les liquides lourds recueillis dans des containeurs descellés sont recueillis dans la chambre (3) sont aspirés dans un réservoir externe par un canal d'aspiration (19) au fond de la chambre (3).

11. Dispositif selon la revendication 1, qui se **caractérise par** cela que les liquides légers recueillis dans les containeurs descellés recueillis dans la chambre (3) sont aspirés à travers le canal d'aspiration (20), juste sous la surface du liquide remplissant la chambre (3).
